# EUROPEAN PATENT APPLICATION

(11) **EP 1 677 403 A1**
(43) Date of publication of application: **05.07.2006**
(21) Application number: 03818786.0
(22) Date of filing: 26.09.2003
(51) Int. Cl.: H02J 3/00

(54) **MOTOR DRIVE SYSTEM**

(71) Applicant: Toshiba Mitsubishi-Electric Industrial Systems Corporation, Minato-ku, Tokyo 108-0073 (JP)
(72) Inventor: TOYODA, Masaru c/o Mitsubishi Denki K. K., Tokyo 100-8310 (JP)
(74) Representative: Popp, Eugen
(86) International application number: PCT/JP2003/012327
(87) International publication number: WO 2005/031939

(57) **Abstract**

The invention relates to an electric motor drive system in which multiple generators (6 to 10) driven by mechanical power generating units (1 to 5) are connected in parallel with each other to a common distribution bus (12), multiple power convertor units (61) for outputting variable-amplitude and variable-frequency a.c. power and phase detecting means (48) for detecting a voltage phase of the common distribution bus are connected to this common distribution bus (12), and multiple motors (23 to 27) are driven by the multiple power convertor units. By the phases of carrier frequencies PWM-controlling convertors of the respective power convertor units being set to predetermined values with the voltage phase of the common distribution bus detected by the phase detecting means (48) as a base, the power convertor units are given a function of reducing harmonics to the common distribution bus.

## Description

### Technical Field

This invention relates to an electric motor drive system in which multiple generators having mechanical power generating units as motive power sources are connected in parallel with each other to a common distribution bus and electric power convertor units for operating at variable speed multiple a.c. motors driving load machines are connected in parallel with each other to this common distribution bus.

### Background Art

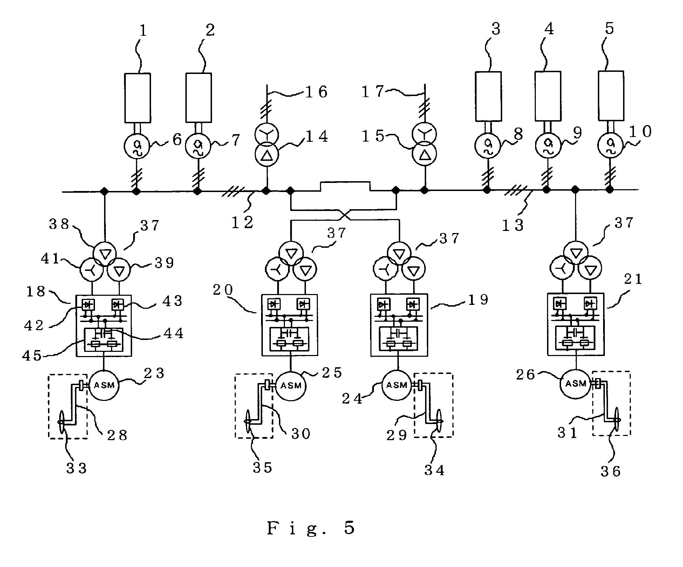

Fig. 5 is a construction view showing an example of an electric motor drive system of related art for use in electric ship propulsion shown in International Publication No. WO02/100716A1.

In Fig. 5, screws 33 to 36 are each driven at variable speed by induction motors 23 to 26 via rotating shafts 28 to 31. The induction motors 23 to 26 are driven at variable speed by power convertor units 18 to 21, respectively, and the power necessary for variable-speed drive is supplied from a common distribution bus 12, 13 via transformers 37. The output terminals of generators 6 to 10 driven by diesel engines 1 to 5 are connected to this common distribution bus 12, 13. 38 is the primary windings of the transformers 37; 39 and 41 are the secondary windings of the transformers 37; 42 and 43 are rectifiers; 44 is a condenser; and 45 is an invertor.

In a system construction of this kind, mechanical power outputted by the diesel engines 1 to 5 is converted to electrical power by the generators 6 to 10, goes through the common distribution bus 12, 13, the transformers 37, the power convertor units 18 to 21, the induction motors 23 to 26 and the rotating shafts 28 to 31 and is finally used as mechanical power to operate the screws 33 to 36 at variable speed. Also, some of the mechanical power outputted by the diesel engines 1 to 5 is also supplied to other load devices connected to low-voltage distribution lines 16 and 17 via transformers 14 and 15.

Although they are not shown in the drawings, circuit-breakers are provided respectively between the generators 6 to 10 and the common distribution bus 12, 13 and between the transformers 37 (of which there are 4) and the common distribution bus 12, 13. When an abnormality has arisen on a generator side or an induction motor side, the circuit-breaker in the corresponding location is opened and it is cut off from the common distribution bus 12, 13.

An electric propulsion system to which this kind of electric motor drive system has been applied, compared to a conventional propulsion system in which screws are driven by diesel engines directly, has the merits that vibration is low, adjustment of the screw rotation directions and speeds is easy, and efficiency is good. Because of this, application in luxury passenger ships, where ride comfort is viewed as important, and ice-breaking ships, which repeat forward and rearward movement, and the like, has been increasing.

And, in LNG plants for liquefying natural gas, conventionally, for the driving of compressors used in liquefying equipment, mechanical power generating units such as gas turbines and steam turbines have been used. However, because of the merits that the amount of exhaust gas is low and efficiency is good, the application of mechanical drive systems similar to the electric ship propulsion system is being started. The construction of such an electric motor drive system for use in an LNG plant is for example one obtained by replacing the screws 33 to 36 in Fig. 5 with compressors.

An electric motor drive system of related art is constructed as described above, but because the power convertor units do not have a harmonic-reducing function, outflow of harmonics to the common distribution bus constitutes a simple addition of harmonics from the power convertor units connected to that bus. On the other hand, because the capacities of the generators are determined by the antiphase current (harmonic current) value flowing in to the generators from the load equipment, there has been the problem that if the harmonic current is large then inevitably the rated capacities of the generators have to be made large.

This problem of generator capacity is an area where improvement has been sought, since, particularly in an electric motor drive system for use in electric ship propulsion or an LNG plant, to keep down capital costs it is desirable that the number of diesel engines, generators, power convertor units and induction motors and so on be low.

The present invention was made to resolve the kinds of problem point discussed above, and it is an object of the invention to provide an electric motor drive system with which it is possible to reduce the rated capacities (necessary capacities) of generators connected to a common distribution bus by providing power convertor units with a function of suppressing harmonic currents exchanged between the power convertor units and the common distribution bus.

### Disclosure of the Invention

The electric motor drive system of this invention is one having multiple generators, driven by mechanical power generating units outputting mechanical power, for generating a.c. electrical power; a common distribution bus to which output terminals of the multiple generators are connected in parallel; multiple power convertor units, having input terminals connected to the common distribution bus, for outputting variable-amplitude and variable-frequency a.c. power; multiple generators, severally connected to the power convertor units, for driving respective load machines; and phase-detecting means for detecting the voltage phase of the common distribution bus, wherein by the phases of carrier frequencies for PWM-controlling convertors of the power convertor units being set to respectively different predetermined values with the voltage phase of the common distribution bus detected by the phase-detecting means as a base, harmonics to the common distribution bus arising from input currents of the convertors of the power convertor units are reduction-controlled.

The desirable phase difference between the carrier frequencies of the multiple power convertor units, if the number of power convertor units operating is written N, is 360°/N.

With this invention, because the power convertor units connected to the common distribution bus are provided with a harmonic-suppressing function, there is the result that at the same load capacity harmonic current in the common distribution bus can be reduced, and the rated capacities of the generators connected to the bus can be reduced.

And an electric motor drive system of this invention is one having multiple generators, driven by mechanical power generating units outputting mechanical power, for generating a.c. power; a common distribution bus to which output terminals of the multiple generators are connected in parallel; multiple power convertor units, having input terminals connected to the common distribution bus, for outputting variable-amplitude and variable-frequency a.c. power; multiple generators, severally connected to the power convertor units, for driving respective load machines; phase-detecting means for detecting the voltage phase of the common distribution bus; number of units setting means for monitoring the operating states of the multiple power convertor units, calculating an optimal carrier frequency phase difference of the power convertor units in correspondence with the number of units operating at that time, and outputting predetermined phase difference commands; and a variable-phase setter provided in each of the power convertor units for receiving a phase difference command from the number of units setting means and adjusting a carrier frequency phase difference set value respective to the voltage phase of the common distribution bus, wherein by the phases of carrier frequencies of PWM-control convertors of the power convertor units in the operating state being adjusted to respective predetermined values by the variable-phase setters on the basis of commands from the number of units setting means in correspondence with changes in the number of the multiple power convertor units that are operating, reduction-control of harmonics suited to the number of units operating at that time is possible.

Also, in an electric motor drive system of the invention, the power convertor units are each provided with an operating state detector for detecting the operating state of the power convertor unit, and the number of units setting means is constructed to output phase difference commands on the basis of operating information from the respective operating state detectors and thereby to automatically change the set values of the carrier frequency phases in correspondence with changes in the number of power convertor units that are operating.

With an electric motor drive system of this invention constructed like this, even if while the system is operating there is an increase or decrease in the number of operating power convertor units, in correspondence with the number of power convertor units that are operating the carrier frequency phases can be automatically adjusted so that the amount of cancellation of harmonics becomes a maximum, and more stable operation of the generators becomes possible.

### Brief Description of the Drawings

Fig. 1 is a construction view showing an electric motor drive system constituting an Embodiment 1 of the invention;
Fig. 2 is a view showing an example of a voltage waveform of when a power convertor unit is PWM-controlled in Embodiment 1 of the invention;
Fig. 3 is a phenomenon view showing reduction of harmonics in Embodiment 1 of the invention;
Fig. 4 is a construction view showing an electric motor drive system constituting an Embodiment 2 of the invention; and
Fig. 5 is a construction view showing an example of an electric motor drive system of related art.

### Best Mode for Carrying Out the Invention

### Embodiment 1

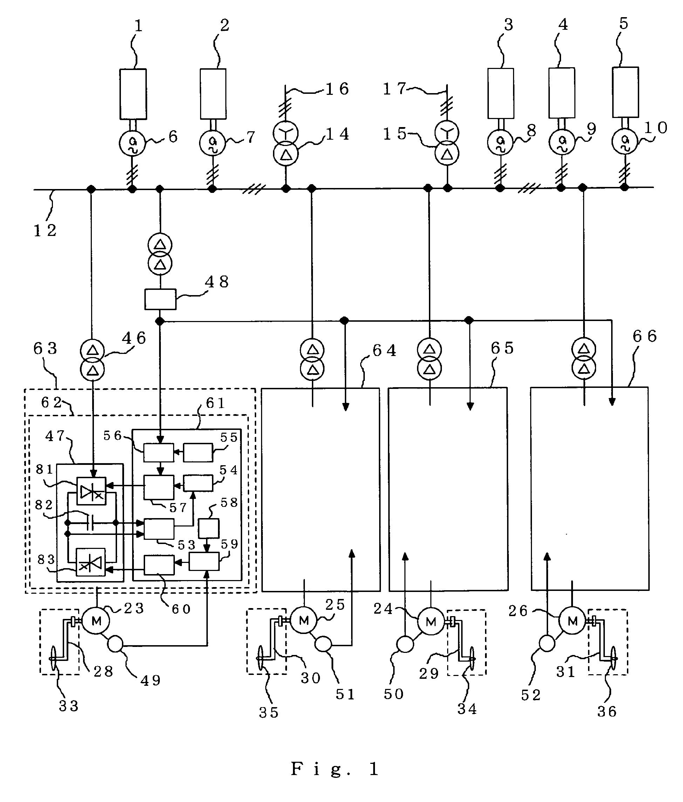

Fig. 1 is a construction view showing an electric motor drive system for ship propulsion use constituting an Embodiment 1 of this invention. In Fig. 1, multiple generators 6 to 10 are severally driven by diesel engines (mechanical power generating units) 1 to 5 outputting mechanical power and are connected in parallel with each other to a common distribution bus 12 via circuit-breakers (not shown) and supply generated a.c. electrical power to the common distribution bus 12. Multiple induction motors 23 to 26 drive screws (load machines) 33 to 36 linked to respective rotating shafts 28 to 31 thereof. The induction motors 23 to 26 are provided with respective speed detectors 49 to 52. The induction motor 23 is connected to the common distribution bus 12 via a transformer 46 and a motor control unit 63. A circuit-breaker (not shown) is connected between the common distribution bus 12 and the transformer 46. The induction motors 24 to 26 also are each connected to the common distribution bus 12 in the same way as the induction motor 23 via a circuit-breaker, a transformer and a motor control unit 64 to 66. The motor control units 63 to 66 each have the same construction and functions, and representatively details are shown only for the motor control unit 63.

The motor control unit 63 has a power convertor unit 62. The power convertor unit 62 has a main circuit 47 and a control circuit part 61, and is constructed so that reactive power and active power of input power can be controlled with the main circuit 47. This main circuit 47 is for example constituted by a converter-invertor type (DC link type) convertor device having a high power rate convertor 81 for converting a.c. power into d.c. power, a smoothing condenser 82 for smoothing the converted d.c. power, and a self-exciting invertor 83 for converting d.c. power to a.c. power and driving the induction motor 23.
48 is a phase-detecting circuit for detecting the voltage phase of the common distribution bus 12, and for example consists of a known PLL circuit.
53 is a d.c. voltage detector for detecting the d.c. voltage of the convertor 81 (the d.c. voltage of the smoothing condenser 82). 54 is a d.c. voltage control circuit for receiving the detected d.c. voltage of the d.c. voltage detector 53 and on the basis of its deviation from a predetermined value controlling the d.c. voltage of the convertor 81 to that predetermined value. 55 is a phase setter of a carrier frequency for PWM-controlling the convertor 81 of the main circuit 47, and sets a transmission phase respective to the voltage phase of the common distribution bus 12. 56 is a carrier frequency generator for PWM-controlling the convertor 81, and 57 is a convertor control circuit for driving the convertor 81 of the main circuit 47 with the output of the d.c. voltage control circuit 54 and includes a circuit for PWM-controlling the convertor 81 on the basis of the carrier frequency of the carrier frequency generator 56. 58 is a speed command setting circuit for setting or receiving a speed command value of the induction motor 23 on the basis of a command from outside. 59 is a speed control circuit for calculating a current command value of the invertor 83 of the main circuit 47, and calculates a feedback speed from a signal from the speed detector 49 and receives a speed command value that is the output of the speed command setting circuit 58 and calculates the deviation between this speed command value and the feedback speed and calculates a current command value so that this deviation approaches zero. 60 is an invertor control circuit for receiving the output of the speed control circuit 59 and controlling the invertor 83 of the main circuit 47. 61 is a control circuit part for controlling the main circuit 47 of the power convertor unit 62, and includes the above-mentioned d.c. voltage detector 53, d.c. voltage control circuit 54, phase setter 55, carrier frequency generator 56, convertor control circuit 57, speed command setting circuit 58, speed control circuit 59, and invertor control circuit 60.

Some of the power from the common distribution bus 12 is also supplied to other load devices connected to low-voltage distribution lines 16 and 17 via transformers 14 and 15.

The operation of Fig. 1 will now be described.

The generating system performs generation so that even with a maximum load connected to the common distribution bus 12 it provides an a.c. power output of a predetermined frequency and voltage. And for example when the power consumed by the load increases within the rated range of the generating system, by the output of the diesel engines (prime movers) 1 to 5 being increased to make the output power of the generators 6 to 10 equal to the consumed power, the frequency and voltage of the common distribution bus 12 are kept at predetermined values.
Here, the load capacity that the generators are capable of generating output for is determined by the antiphase current (harmonic current) flowing into the generators from the load equipment, and it is standard for the amount of harmonic to be kept to not greater than 14% of the generator capacity. That is, even if the load capacity is the same, if the harmonic current is large it is regarded that a large rated capacity of the generators is necessary, and if the harmonic current is low the rated capacity of the generators can be made low. This invention was made with attention to the point described above, and in it, by a harmonic suppressing function being provided among the power convertor units of the motor control units 63 to 66, harmonic current in the common distribution bus 12 is reduced, and the rated capacities (necessary capacities) of the generators 6 to 10 connected to the common distribution bus 12 can be reduced.

In Fig. 1, the motor control units 63 to 66 perform drive-control of the motors so that the speeds of the induction motors 23 to 26 assume required values.
Explaining the motor control unit 63 as an example representatively, the power convertor unit 62 receives a.c. power from the transformer 46, controls the invertor 83 of the main circuit 47 on the basis of a speed command value that is the output of the speed command setting circuit 58 based on a speed command from outside, and outputs variable-amplitude, variable-frequency a.c. power that drives the induction motor 23.

When not executing a harmonic-reducing action based on multiple-unit operation of the power convertor units, the carrier frequency generator 56 for PWM-controlling the convertor 81 of the power convertor unit generates a carrier frequency at a specified frequency irrespective of its phase with respect to the common distribution bus 12, but when executing a harmonic-reducing action based on multiple-unit operation, it generates a carrier frequency of a predetermined phase set by the phase setter 55 with respect to the voltage phase of the common distribution bus 12 detected by the phase-detecting circuit 48, and applies this to the convertor control circuit 57.
The d.c. voltage detected by the d.c. voltage detector 53 and a predetermined voltage value are compared by the d.c. voltage control circuit 54, and the d.c. voltage control circuit 54 calculates a current command reference value so that the deviation approaches zero and outputs it to the convertor control circuit 57.
The convertor control circuit 57 performs PWM-control of the convertor 81 on the basis of the current command reference value from the d.c. voltage control circuit 54 and the carrier frequency from the carrier frequency generator 56, and controls the convertor 81 so that the d.c. voltage of the convertor 81 assumes a required value.
At this time, the phase of the carrier frequency from the carrier frequency generator 56 is transmitted at a predetermined phase difference set by the phase setter 55 with respect to the voltage phase of the common distribution bus 12. And by the phase difference with respect to the voltage phase of the common distribution bus 12 of this carrier frequency transmitted from the carrier frequency generator 56 being made different by a predetermined value in the power convertor units of each of the motor control units 63, 64, 65 and 66, the overall harmonic current level of the common distribution bus can be reduced.
For example, when two power convertor units are driven, by the carrier frequencies for PWM-controlling the convertors 81 of the respective power convertor units being given a phase difference of 180°, harmonics can be reduced. That is, the voltage phase of the common distribution bus 12 is detected with the phase-detecting circuit 48, and with this detected phase as 0° (a reference) the phase of the carrier frequency of the first power convertor unit 62 is matched to the detected phase. With respect to this, the phase of the carrier frequency of the second power convertor unit is given a phase difference of 180° with respect to the carrier frequency of the first unit by its phase setter.

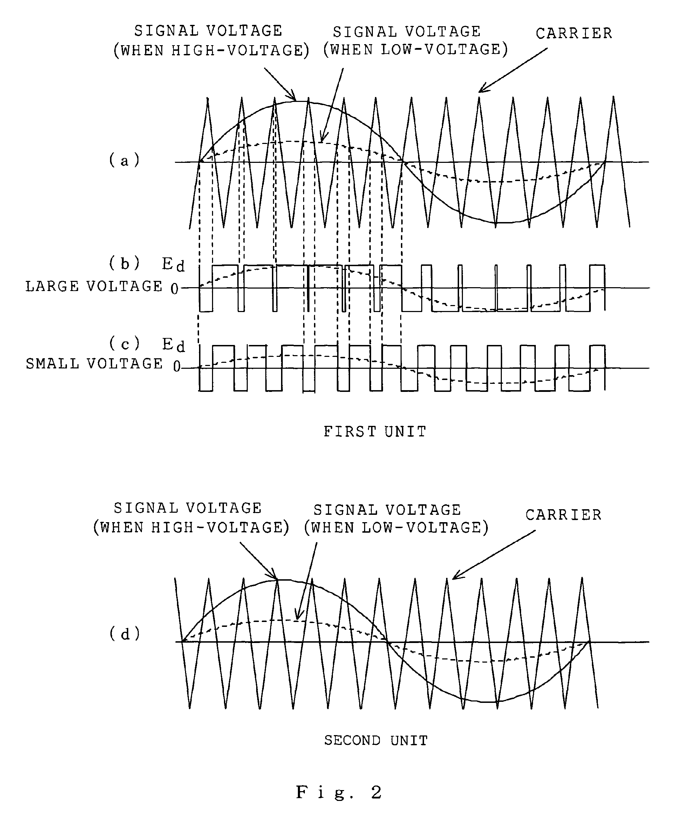

Figs. 2 (a) to (d) show an example of a voltage waveform of PWM-control in this case, Fig. 2 (a) being a waveform chart of carrier frequency and signal voltage of the first power convertor unit, Figs. 2 (b) and (c) output voltage waveform charts of the same, and Fig. 2 (d) a waveform chart of carrier frequency and signal voltage of the second power convertor unit. Because the output voltage waveform charts of the second power convertor unit can be easily analogized from Figs. 2 (b) and (c) they have been omitted.
As is clear from a comparison of Fig. 2 (a) and Fig. 2 (d), a phase difference of 180° has been set between the carrier frequency of the first power convertor unit and the carrier frequency of the second power convertor unit.

When three power convertor units are driven, reduction of harmonics can be effected by a phase difference of 120° being provided between their carrier frequencies. This is because, by the same principle as that by which the total current of a 3-phase alternating current becomes 0 (zero), the harmonic currents cancel each other out among the power convertor units.

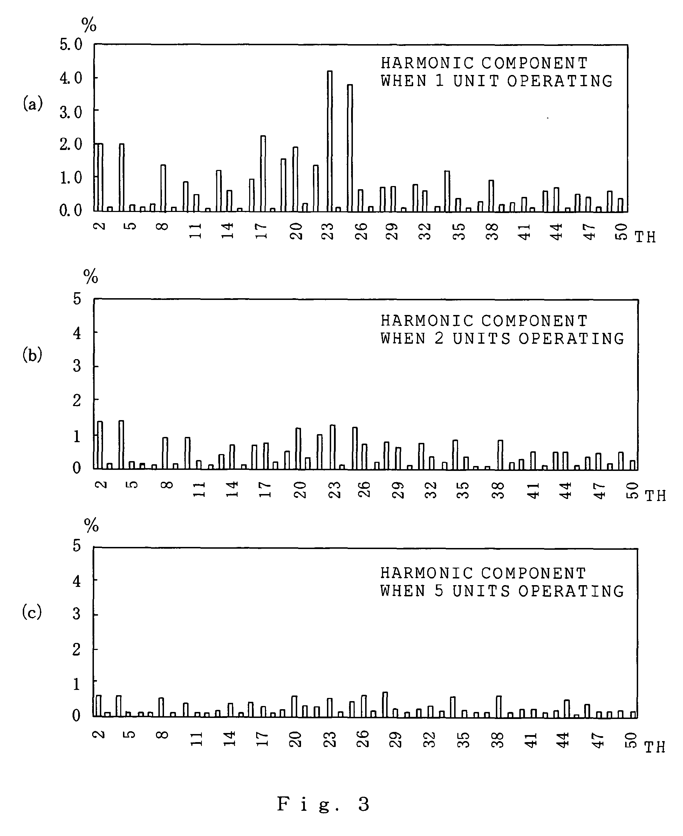

Fig. 3 is a phenomenon view showing a harmonic current reduction effect in a common distribution bus of an electric motor drive system according to the invention, respectively (a) showing the harmonic component of when one power convertor unit is operated (a case in which there is no reduction effect), (b) the harmonic component when two power convertor units are operated, and (c) the harmonic component when five power convertor units are operated.
As is clear from Fig. 3, the more the number of operating power convertor units increases the greater is the degree to which the harmonics cancel each other out, and the harmonic level is lower in the case of five units than in the case of two units.

As explained above, with Embodiment 1 of this invention, by the respective carrier frequencies of multiple power convertor units connected to a common distribution bus being given predetermined phase differences from each other with the voltage phase of the common distribution bus as a reference, a harmonic suppression function is provided among the multiple power convertor units, and consequently at the same load capacity it is possible to reduce the harmonic current in the common distribution bus and it is possible to reduce the rated capacities (necessary capacities) of generators connected to the common distribution bus.

The phase differences between the carrier frequencies of the multiple power convertor units is set so that the level of harmonics in the common distribution bus is a minimum, and generally, if the number of power convertor units operating is written N, then it should be made 360°/N.

### Embodiment 2

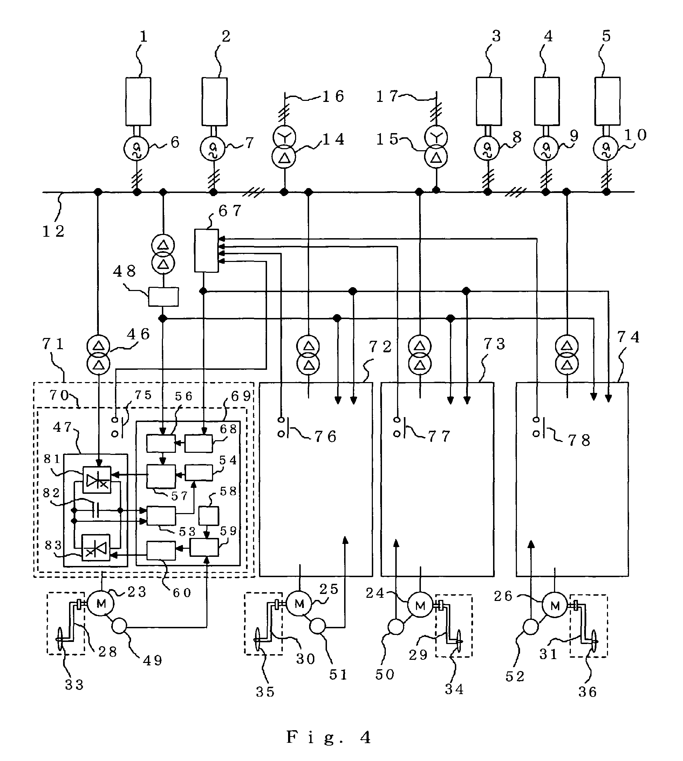

Fig. 4 is a construction view showing an electric motor drive system constituting an Embodiment 2 of this invention. The system shown in this Embodiment 2 is one in which for example when one of the power convertor units fails while the system is operating, in correspondence with the decrease in the number of power convertor units the phase difference between the carrier frequencies of the power convertor units is automatically changed so that the harmonic current is a minimum.

In Fig. 4, parts assigned the same reference numbers as in Fig. 1 show parts the same as or equivalent to parts in Fig. 1.
In Fig. 4, 75 to 78 are operating state detectors (contacts) provided in motor control units 71 to 74, and when the contacts are ON output that the power convertor unit is operating. 67 is a number of units setter, and calculates a number of power convertor units operating N on the basis of the outputs from the operating state detectors (contacts) 75 to 78, computes an optimum phase difference of the carrier frequencies of the power convertor units on the basis of this number of units N, and applies predetermined phase difference commands to the power convertor units of the motor control units 71 to 74.
The motor control units 71 to 74 each have the same construction and functions, and representatively details are shown only for the motor control unit 71.

The motor control unit 71 has a power convertor unit 70, and the power convertor unit 70 has a main circuit 47 and a control circuit part 69 for controlling this main circuit 47. A variable-phase setter 68 for adjusting a set phase value of a carrier frequency for PWM-controlling a convertor 81 of the main circuit 47 is provided in the control circuit part 69.

In the electric motor drive system of Embodiment 2 constructed as described above, a number of units setter 67 monitors the operating states of the power convertor units on the basis of the outputs from the operating state detectors 75 to 78, calculates an optimum phase difference of the carrier frequencies of the power convertor units corresponding to the number of units operating N at that time, and applies predetermined phase difference commands to the variable-phase setters 68. The variable-phase setters 68 receive the commands and reset the phases of the carrier frequencies of the power convertor units with respect to the voltage phase of the common distribution bus 12 to optimum values corresponding to the number of units operating at that time.

Thus in this Embodiment 2, even when there is an increase or a decrease in the number of power convertor units operating, for example when while the system is operating one of the power convertor units fails or when a stopped power convertor unit starts operating, in correspondence with the number of power convertor units operating the phases of the carrier frequencies can be automatically adjusted so that the degree to which the harmonics cancel out is a maximum, and more stable generator operation becomes possible.

### Industrial Applicability

This invention is suited to use in an electric motor drive system for use in electric ship propulsion or an electric motor drive system for use in an LNG plant.

## Claims

1. An electric motor drive system, **characterized in that** it comprises multiple generators, driven by mechanical power generating units outputting mechanical power, for generating a.c. electrical power; a common distribution bus to which output terminals of the multiple generators are connected in parallel; multiple power convertor units, having input terminals connected to the common distribution bus, for outputting variable-amplitude and variable-frequency a.c. power; multiple generators, severally connected to the power convertor units, for driving respective load machines; and phase-detecting means for detecting the voltage phase of the common distribution bus, and by phases of carrier frequencies for PWM-controlling convertors of the power convertor units being set to respectively different predetermined values with the voltage phase of the common distribution bus detected by the phase-detecting means as a base, harmonics to the common distribution bus arising from input currents of the convertors of the power convertor units are reduction-controlled and the necessary capacities of the multiple generators are reduced.

2. An electric motor drive system according to claim 1, **characterized in that** the phase difference between the carrier frequencies of the multiple power convertor units, when the number of power convertor units operating is written N, is made 360°/N.

3. An electric motor drive system **characterized in that** it comprises multiple generators, driven by mechanical power generating units outputting mechanical power, for generating a.c. power; a common distribution bus to which output terminals of the multiple generators are connected in parallel; multiple power convertor units, having input terminals connected to the common distribution bus, for outputting variable-amplitude and variable-frequency a.c. power; multiple generators, severally connected to the power convertor units, for driving respective load machines; phase-detecting means for detecting the voltage phase of the common distribution bus; number of units setting means for monitoring the operating states of the multiple power convertor units, calculating an optimal carrier frequency phase difference of the power convertor units in correspondence with the number of units operating at that time, and outputting predetermined phase difference commands; and a variable-phase setter provided in each of the power convertor units for receiving a phase difference command from the number of units setting means and adjusting a carrier frequency phase difference set value respective to the voltage phase of the common distribution bus, and by the phases of carrier frequencies of PWM-control convertors of the power convertor units in the operating state being adjusted to respective predetermined values by the variable-phase setters on the basis of commands from the number of units setting means in correspondence with changes in the number of the multiple power convertor units that are operating, reduction-control of harmonics suited to the number of units operating at that time is possible.

4. An electric motor drive system according to claim 3, **characterized in that** each of the power convertor units comprises an operating state detector for detecting the operating state of the respective power convertor units, and the number of units setting means outputs phase difference commands on the basis of operating information from the respective operating state detectors and thereby automatically changes the set values of the carrier frequency phases in correspondence with changes in the number of power convertor units operating.

5. An electric motor drive system according to claim 3 or 4, **characterized in that** the phase difference between the carrier frequencies of the multiple power convertor units, when the number of power convertor units operating is written N, is made 360°/N.
